Europäisches Patentamt

European Patent Office

Office européen des brevets

(19)

(11) Numéro de publication: **0 159 489**
A1

## (12) DEMANDE DE BREVET EUROPEEN

(21) Numéro de dépôt: **85102212.9**

(51) Int. Cl.⁴: **F 01 K 17/02**, F 01 D 3/02

(22) Date de dépôt: **28.02.85**

(30) Priorité: **01.03.84 FR 8403230**

(43) Date de publication de la demande: **30.10.85**
**Bulletin 85/44**

(84) Etats contractants désignés: **AT BE CH DE FR GB IT LI LU NL SE**

(71) Demandeur: **ALSTHOM-ATLANTIQUE Société anonyme dite:, 38, Avenue Kléber, F-75784 Paris Cédex 16 (FR)**

(72) Inventeur: **Riollet, Gilbert, 11 rue du Cherche Midi, F-75006 Paris (FR)**

(74) Mandataire: **Weinmiller, Jürgen et al, Zeppelinstrasse 63, D-8000 München 80 (DE)**

(54) **Corps de turbine pour chauffage urbain.**

(57) Corps MP ou HP d'une turbine destinée à la production combinée d'énergie et de chaleur pour chauffage urbain comportant des aubages portés par un rotor (31) tournant à l'intérieur d'un stator (32), une admission de vapeur (26') à l'entrée, deux échappements (12' et 17') à des pressions différentes $p_1$ et $p_2$ ($p_2 > p_1$) alimentant une partie B.P. (4) de la turbine et deux échappements (15', 20') aux pressions $p_1$ et $p_2$ pour alimenter deux échangeurs de chauffage urbain (22, 23) en série fournissant chacun sensiblement la moitié de la puissance de chauffage.

Ce corps possède à partir de son admission de vapeur (26') un simple flux (27) qui se dédouble en deux flux partiels (28) recevant des débits de vapeur sensiblement égaux, ledit point de dédoublement étant choisi suffisamment loin des échappements (17', 20') à la pression $p_2$ pour que les variations de débits aient peu ou pas d'influence sur la pression de vapeur audit point de dédoublement.

## Corps de turbine pour chauffage urbain

La présente invention a trait à un corps MP ou HP d'une turbine destinée à la production combinée d'énergie et de chaleur pour chauffage urbain comportant des aubages portés par un rotor tournant à l'intérieur d'un stator, une admission de vapeur à l'entrée, deux échappements à des pressions différentes $p_1$ et $p_2$ ($p_2 > p_1$) alimentant une partie B.P. de la turbine et deux échappements aux pressions $p_1$ et $p_2$ pour alimenter deux échangeurs de chauffage urbain en série fournissant chacun sensiblement la moitié de la puissance de chauffage.

Un tel corps de turbine est décrit dans l'article de Helmut MÜHLHAUSER "turbines à vapeur dans les centrales de chauffage urbain classiques" revue Brown Boveri 1977, n° 9, p.536 à 549 (voir notamment fig.12 g, 21, 22).

Dans la turbine connue le corps de turbine M.P est dissymétrique et à double flux et le débit de vapeur est divisé en deux dès l'entrée du corps M.P et à la sortie de ce corps chaque écoulement est à pression différente. Il y a indépendance entre les deux écoulements partiels de vapeur jusqu'au condenseur relié à la sortie de la partie B.P.

Grâce à des vannes papillons disposées sur les échappements alimentant la partie B.P. et à des by-pass de réglage disposés en parallèle sur les circuits d'eau des échangeurs, la répartition de vapeur entre l'alimentation de la partie B.P. et celles des échangeurs est réglée automatiquement pour que chaque échangeur fournisse la même quantité de puissance et que l'eau après avoir traversé les deux échangeurs ait la température voulue.

Il est en effet important pour le rendement que chaque échangeur fournisse sensiblement la même puissance à l'eau du chauffage urbain. Le rendement obtenu grâce au corps de turbine connu est bon. Mais une amélioration même faible du rendement quand on tient compte de toute la vie de la machine conduit à une économie d'énergie importante.

Le corps de turbine selon l'invention permettant d'améliorer le rendement est caractérisé en ce que qu'il possède à partir de son admission de vapeur un simple flux qui se dédouble en deux flux partiels recevant des débits de vapeur sensiblement égaux, ledit point de dédoublement étant choisi suffisamment loin des échappements à la pression $p_2$ pour que les variations de débits aient peu ou pas d'influence sur la pression de vapeur audit point de dédoublement.

Le rendement du corps de turbine selon l'invention est meilleur que celui de l'état de la technique parce qu'une partie de la circulation de vapeur est en simple flux.

On choisira de préférence le point de dédoublement tel que lorsque la pression d'admission est égale à sa valeur nominale, la pression au point de dédoublement est supérieure à $\frac{1,8}{x}$ fois la pression de saturation correspondant à la température nominale de l'eau fournie au chauffage urbain, x étant le rapport de la puissance thermique minimale de chauffage à sa valeur maximale en contrepression.

Pour faciliter la construction du corps de turbine et équilibrer les poussées on monte le corps de façon que les directions axiales suivies par la vapeur dans les deux flux partiels soient opposées.

La présente invention sera mieux comprise à la lumière de la description qui va suivre dans laquelle
- la figure 1 représente une turbine selon l'état de la technique,
- la figure 2 représente le diagramme de fonctionnement de la turbine connue et de la turbine ayant le corps de turbine selon l'invention,
- la figure 3 représente la turbine avec le corps de turbine selon l'invention,
- la figure 4 représente une vue détaillée du corps de turbine selon l'invention.

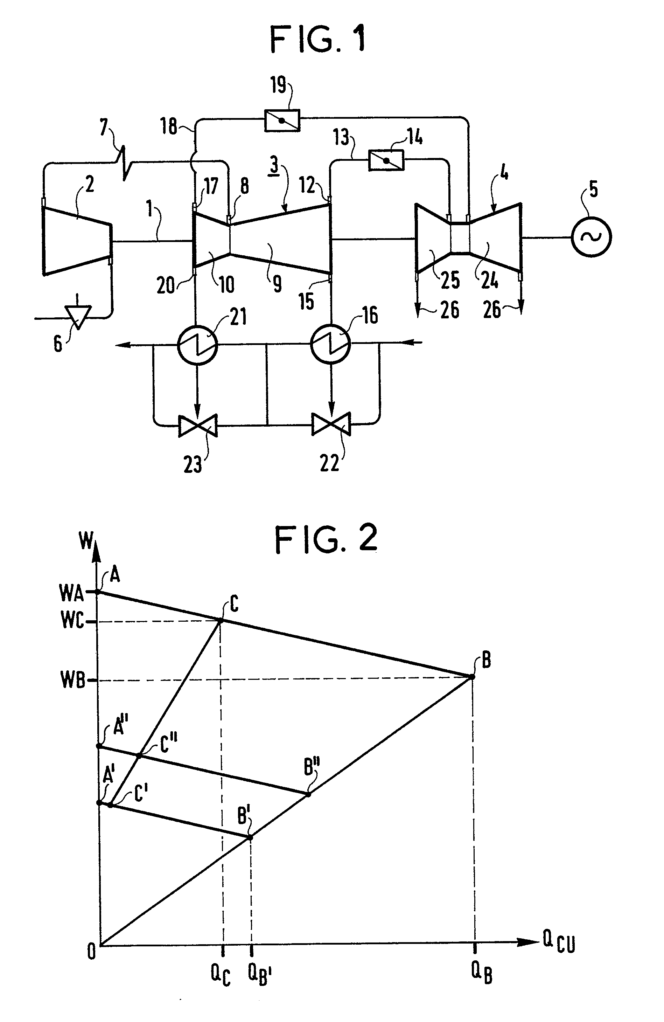

La turbine connue telle que représentée à la figure 1 comporte un arbre 1 sur lequel sont montés un corps H.P.2, un corps M.P.3, un corps B.P.4 et un alternateur 5. Une vanne d'admission de vapeur 6 sert à régler le débit de vapeur admis à l'entrée du corps H.P.2. La vapeur sortant du corps H.P.2 traverse la chaudière 7 où elle est resurchauffée puis est appliquée à l'entrée 8 de l'étage M.P.3.

Ce corps M.P.3 est à double flux et les deux demi-flux 9, 10 constituant le corps 3 comportent chacun un nombre d'étages différents. Le demi-flux 9 ayant le plus d'étages fournit à sa sortie de la vapeur à une pression $p_1$ inférieure à la pression $p_2$ de vapeur à la sortie du demi-flux 10.

Le corps B.P.4 est à double flux, il est également constitué de deux demi-flux 24 et 25.

Le demi-flux 25 a un nombre d'étages inférieur au demi-flux 24.

Le demi-flux 9 comporte un premier échappement 12 relié par un conduit 13 muni d'une vanne papillon 14 à l'admission du demi-flux 25 et un second échappement 15 servant à alimenter un premier échangeur de chaleur 16.

Le demi-flux 10 comporte un premier échappement 17 relié par un conduit 18 muni d'une vanne papillon 19 à l'admission du demi-flux 24 et un second échappement 20 servant à alimenter un second échangeur 21.

Les échangeurs 16 et 21 sont disposés en série et comportent chacun un by-pass de réglage 22, 23. L'eau destinée au chauffage urbain entre à une température $t_1$ à l'entrée de l'échangeur 16 d'où elle sort à une température moyenne $t_m$. A la sortie de l'échangeur 21 elle sort à la température $t_2$ (avec $t_m = \dfrac{t_1 + t_2}{2}$)

La vapeur aux sorties 26 des deux demi-flux 24 et 25 est à la pression du condenseur. Le débit de vapeur dans les demi-flux 9 et 10 est substantiellement le même. L'ouverture des vannes 14 et 19 et celle des by-pass 22, 23 est réglée automatiquement pour que $t_2$ ait la valeur désirée et pour que $t_m = \dfrac{t_1 + t_2}{2}$ .

Les vannes 14 et 19 sont toujours commandées en même temps et les by-pass 22, 23 également, de façon que le débit dans l'échappement 12 soit égal au débit dans l'échappement 17 et que le débit dans l'échappement 15 soit égal au débit dans l'échappement 20.

Le fonctionnement de la turbine peut être représenté sur un schéma $Q_{cu}$, W (voir figure 2) avec W la quantité d'énergie servant à la production d'électricité et $Q_{cu}$ l'énergie servant au chauffage urbain.

Quand la chaudière est à sa puissance maximum et que les vannes 14 et 19 sont ouvertes ainsi que les by-pass 22 et 23 toute la vapeur produite sert à la production d'électricité. Soit A ce point de fonctionnement ($Q_{cu} = 0$, $W = W_A$).

La chaudière étant toujours à sa puissance maximum mais les vannes 14 et 19 étant fermées ainsi que les by-pass 22 et 23, la quantité d'énergie maximale est alors utilisée pour le chauffage urbain $Q_B$ ; l'énergie utilisée pour la production d'électricité est alors $W_B$ ; soit B ce point de fonctionnement ($Q_{cu} = Q_B$, $W = W_B$). On dit alors que la turbine fonctionne en contrepression.

Lorsque la chaudière est à sa puissance maximale avec vannes et by-pass ouverts, (pt A), et que l'on commence à fermer les by-pass en maintenant les vannes ouvertes la chaudière restant à sa puissance maximale, on décrit un segment de droite AC du segment AB.

En C ($Q_c$, $W_c$) les by-pass sont fermées et les vannes 14, 19 sont ouvertes.

Si l'on commence à fermer les vannes 14, 19 on décrit le segment CB.

Lorsque la puissance de la chaudière est au minimum ($P_m$) on décrit le segment A' B' parallèle à AB avec A' sur OA et B' sur OB.

Pour une puissance intermédiaire de la chaudière (Pi) on décrira le segment A"B" parallèle à AB avec A" sur OA et B" sur OB.

Les points C' et C" qui correspondent pour la puissance $P_m$ et $P_i$ aux cas où les by-pass sont ouverts et les vannes fermées sont alignés avec le point C. (Pour certaines turbines il est possible que CC" ne rencontre pas A' B' donc qu'il n'y ait pas de point C')

Ainsi à l'intérieur du trapèze AA' C'C on règle le point de fonctionnement en ouvrant plus ou moins les by-pass et à l'intérieur du trapèze BC C'B' en ouvrant plus ou moins les vannes.

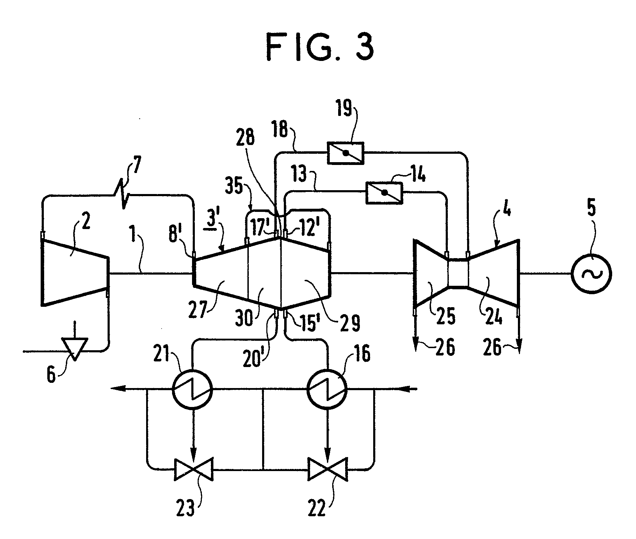

La figure 3 représente le même schéma que celui de la figure 1 dans lequel on a remplacé le corps MP3 par le corps de turbine 3' selon l'invention. Les références ont été conservées pour désigner les mêmes organes.

Ce corps 3' comporte une première partie 27 simple flux dont l'admission 8' est alimentée en vapeur resurchauffée.

La sortie de cette première partie 27 alimente une partie double flux 28 constituée de deux demi-flux 29 et 30 dissymétriques.

Ce demi-flux 29 ayant plus d'étages que le demi-flux 30. Le demi-flux 29 comporte deux échappements 12' et 15' à pression $p_1$ l'un relié à la vanne 14 l'autre à l'échangeur 16. Le demi-flux 30 comporte deux échappements 17' et 20' l'un relié à la vanne 19 l'autre à l'échangeur 21.

Les échappements 12', 17', 15', 20' sont dans la partie médiane du corps 30.

Une conduite 35 relie une sortie de la partie 27 à l'admission du demi-flux 29.

A la sortie de la partie 27 le débit de vapeur se divise en deux débits substantiellement égaux l'un alimentant le demi-flux 29 l'autre le demi-flux 30.

Une vue détaillée moitié en coupe, moitié en perspective du corps 3' est représentée à la figue 4.

Le corps 3' comporte un rotor 31 tournant à l'intérieur d'un stator 32.

La partie simple flux 27 du corps 3' alimentée par deux conduites d'admission 8' comporte neuf étapes mobiles 33. Le demi-flux 30 comporte six étages mobiles 34 montés à la suite des étages mobiles 33 de la partie 27 sur le rotor 31.

Le débit de vapeur à la sortie des étages 33 se divise en deux parties sensiblement égales une alimentant les étages 34 et une alimentant par une conduite 35 l'admission 36 du corps partiel 29.

Ce demi-flux 29 comporte sept étages mobiles 37 montés sur le rotor 31. La circulation axiale du fluide dans ce demi-flux est dans une direction opposée à la direction de circulation du fluide dans la partie 27 et dans le demi-flux 30.

Les échappements 17' et 12' vers les vannes d'une part et les échappements 15' et 20' alimentant les échangeurs d'autre part sont disposés entre les étages 34 et 37.

On pourrait en montant en sens inverse le demi-flux 29 avoir le même sens de circulation de la vapeur dans le demi-flux 29 et dans le demi-flux 30 mais il faudrait alors prévoir les échappements 12' et 15' éloignés des échappements 17' et 20' ce qui conduirait à une installation plus compliquée.

En appelant $p_o$ la pression de vapeur à la sortie de la partie 27 lorsque le débit est 100% c'est-à-dire $Q_{cu} = Q_B$ (figure 2), cette pression sera $x\ p_o$ lorsque le débit sera $x$ % la turbine fonctionnant en contrepression (point de fonctionnement sur OB).

On déduit des lois d'écoulement des fluides que la pression $p_2$ à la

sortie du corps partiel 30 est indépendante de la pression à la sortie de la partie 27 lorsque $\dfrac{p_2}{xp_0} < 0,55$, donc lorsque $p_0 > \dfrac{1,8}{x} p_2$

Pour être certain que cette inégalité soit toujours vérifiée; il faut prendre pour x la plus petite valeur possible c'est-à-dire le rapport de la puissance thermique minimale de chauffage en contrecompression $(Q_B{}_,)$ à sa valeur maximale $(Q_B)$ (voir figure 2).

Compte tenu du fonctionnement de l'échangeur 21 alimenté par la vapeur à pression $p_2$, cette pression $p_2$ est très voisine de la pression de saturation correspondant à la température nominale $t_2$ de l'eau fournie au chauffage urbain.

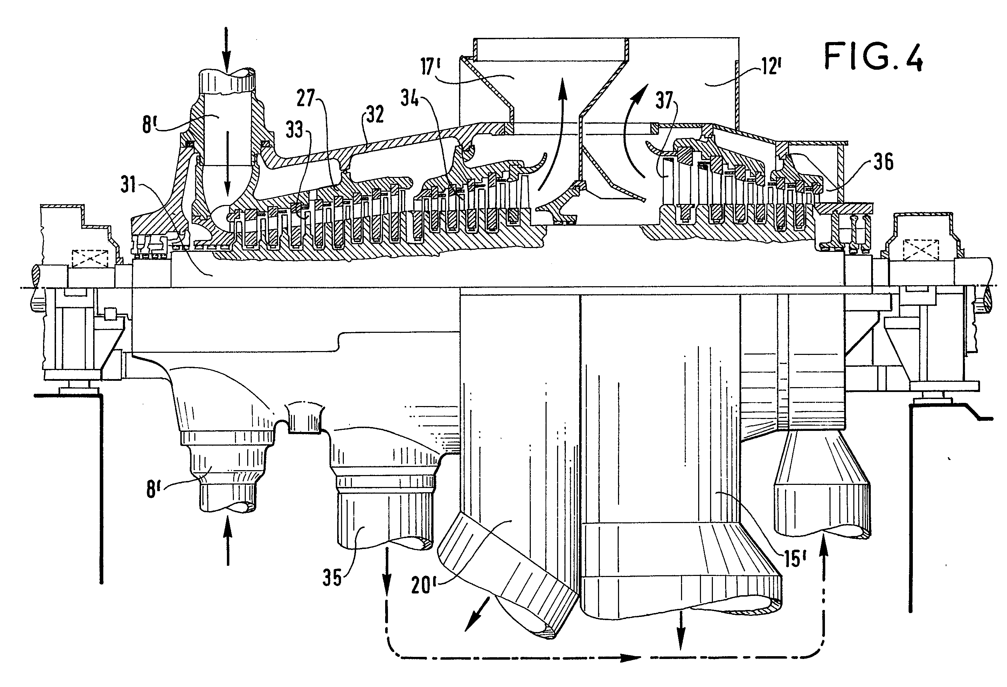

Le corps MP représenté sur la figure 4 fait partie d'une turbine pour chauffage urbain produisant une puissance électrique de 255 MW en fonctionnant sur un cycle supercritique 240 bar/540°C/540°C. La pression nominale d'admission MP est de 50 bars et la pression du point de déboublement $p_0$ est alors de 10 bars, $p_1$ étant égal à 0,5 bar et $p_2$ à 1,2 bar.

La puissance maximale fournie par la chaudière $P_M$ est de 550 MW.
Cette puissance se décompose selon la formule suivante :

$P_M = W + Q_{cu} + Q_{cond} + L.$
Avec W la puissance électrique

$Q_{cu}$ puissance fournie au chauffage urbain

Q cond puissance fournie au condenseur.

L pertes.

Lorsque la turbine fonctionne en contre pression ou en condensation les valeurs sont les suivantes :

| $P_m$ = | W | + $Q_{cu}$ | + Q cond + | L |
|---|---|---|---|---|
| - En contrepression : 550 MW = | 211 | + 320 | + 9 | + 10 |
| - En condensation : 550 MW = | 255 | + 0 | + 285 | + 10. |

avec $Q_B$ = 320 MW et $Q_B{}_,$ = 140 MW, x étant donc égal à 0,44.

Le rendement du corps MP selon l'invention est meilleur que le rendement du corps MP selon la figure 1. En effet on sait que le rendement d'un étage de turbine dépend de l'allongement des étages.

0159489

Or un flux de vapeur non divisé, permet un meilleur allongement des étages.

Pour certaines gammes de turbine à faible puissance sans resurchauffe les détentes MP et HP peuvent être regroupées dans un même corps.

La turbine ne serait alors constituée que d'un corps selon l'invention suivie d'une partie B.P.

0159489

REVENDICATIONS

1/ Corps MP ou HP d'une turbine destinée à la production combinée d'énergie et de chaleur pour chauffage urbain comportant des aubages portés par un rotor (31) tournant à l'intérieur d'un stator (32), une admission de vapeur (8') à l'entrée, deux échappements (12' et 17') à des pressions différentes $p_1$ et $p_2$ ($p_2 > p_1$) alimentant une partie B.P. (4) de la turbine et deux échappements (15', 20') aux pressions $p_1$ et $p_2$ alimentant deux échangeurs de chauffage urbain (22, 23) en série fournissant chacun sensiblement la moitié de la puissance de chauffage, caractérisé en ce qu'il possède à partir de son admission de vapeur (8') un simple flux (27) qui se dédouble en deux flux partiels (28) recevant des débits de vapeur sensiblement égaux, ledit point de dédoublement étant choisi suffisamment loin des échappements (17', 20') à la pression $p_2$ pour que les variations de débits aient peu ou pas d'influence sur la pression de vapeur audit point de dédoublement.

2/ Corps MP ou HP selon la revendication 1, caractérisé en ce que le point de dédoublement est choisi tel que lorsque la pression d'admission est égale à sa valeur nominale, la pression au point de dédoublement est supérieure à $\frac{1,8}{x}$ fois la pression de saturation correspondant à la température nominale de l'eau fournie au chauffage urbain, x étant le rapport de la puissance thermique minimale de chauffage à sa valeur maximale en contrepression.

3/ Corps MP ou HP selon l'une des revendications précédentes, caractérisé en ce que les directions axiales suivies par la vapeur dans les deux flux partiels (28) sont opposées.

0159489

# FIG. 1

# FIG. 2

# FIG. 3

0159489

FIG.4

Office européen
des brevets

RAPPORT DE RECHERCHE EUROPEENNE

0159489
Numéro de la demande

EP 85 10 2212

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | BROWN BOVERI REVIEW, vol. 9, 1977, pages 552-565, Baden, CH; H. MÜHLHÄUSER: "Steam turbines in conventional combined district heating and power stations" * Page 564, colonne de droite; figures 12g,21-23 * | 1,3 | F 01 K 17/02 F 01 D 3/02 |
| Y | GB-A-1 364 108 (STAL-LAVAL) * Page 1, lignes 29-63, 73-80; revendication 1; figure 1 * | 1,3 | |
| A | CH-A- 399 491 (ESCHER WYSS) * Page 1, lignes 63-67; page 2, lignes 7-14; figures 2,3 * | 1,3 | |

DOMAINES TECHNIQUES RECHERCHES (Int. Cl.4)

F 01 D
F 01 K

Le présent rapport de recherche a été établi pour toutes les revendications

| Lieu de la recherche | Date d'achèvement de la recherche | Examinateur |
|---|---|---|
| LA HAYE | 15-07-1985 | ATTASIO R.M. |